# EUROPÄISCHE PATENTSCHRIFT

(11) **EP 1 319 536 B1**
(45) Veröffentlichungstag und Bekanntmachung des Hinweises auf die Patenterteilung: **07.09.2005**
(21) Anmeldenummer: 02023655.0
(22) Anmeldetag: 22.10.2002
(51) Int. Cl.: B60H 1/00, B60H 1/32

(54) **Klimatisierungseinrichtung für ein Fahrzeug**
Vehicle air conditioning system
Système de climatisation pour un véhicule

(30) Priorität: 13.12.2001 DE 10161254
(43) Veröffentlichungstag der Anmeldung: 18.06.2003
(73) Patentinhaber: Konvekta AG, 34613 Schwalmstadt (DE)
(72) Erfinder: Köhler, Jürgen, 38173 Niedersickte (DE); Lemke, Nicholas, 38106 Braunschweig (DE)
(74) Vertreter: LOUIS, PÖHLAU, LOHRENTZ

(56) Entgegenhaltungen:
- EP-A- 0 214 553
- EP-A- 0 827 855
- DE-A- 19 806 654
- US-A- 4 098 093
- US-B1- 6 230 506

## Beschreibung

Die Erfindung betrifft eine Klimatisierungseinrichtung für ein Fahrzeug, mit einem Verdichter mit einem Verdichterantrieb, einem Innenraum-Wärmeübertrager, einem Expansionsorgan, und einem Außenraum-Wärmeübertrager und ggf. einem internen Wärmeübertrager, wobei die Klimatisierungseinrichtung als autarkes Modul ausgebildet ist, und wobei das Modul zur Montage auf dem Dach eines Fahrzeugs vorgesehen ist. Eine derartige Klimatisierungseinrichtung ist zum Beispiel aus EP 0 214 553 A2, das als nächstliegender Stand der Technik gesehen wird, bekannt.

Aus der DE 35 31 045 C2 ist eine Klimaanlage zur Anordnung auf dem Dach eines Kraftfahrzeuges bekannt, die einen Verdampfer und einen Kondensator aufweist, die in einem auf dem Dach zu montierenden Gehäuse angeordnet und durch Leitungen miteinander und mit einem Kompressor verbunden sind, der mit einer Antriebseinrichtung antreibbar ist. Das Gehäuse weist an seiner Unterseite mindestens eine Auslaßöffnung für die in der Klimaanlage erzeugte abgekühlte Luft auf, wobei das Gehäuse zur abdichtenden Anordnung auf dem Dach des Kraftfahrzeuges an seiner Unterseite mit einem umlaufenden Dichtungsrand versehen ist. Das Gehäuse ist mittels Befestigungselementen am Dach des Kraftfahrzeuges lösbar befestigt. Der Kompressor und die Antriebseinrichtung für den Kompressor sind im Gehäuse der Klimaanlage angeordnet. Bei dieser bekannten Klimaanlage handelt es sich um eine Standard-Klimaanlage, die mit R134a betrieben wird. Derartige R 134a-Anlagen lassen bezüglich Leistungsstärke, Effizienz und Bauvolumen noch Wünsche offen. Mit R 134a-Anlagen sind darüber hinaus komfortabel hohe Lufttemperaturen für die Innenraumheizung eines Fahrzeuges wie eines Kleinbusses, eines Minibusses oder eines großen Omnibusses im Wärmepumpenbetrieb praktisch nicht erreichbar, so daß R 134a Wärmepumpenschaltungen zur Fahrzeugheizung derzeit nicht serienmäßig eingesetzt werden.

Die WO 97 27 437 A1 beschreibt eine Kompressionskälteanlage mit einem Kompressor, einem Gaskühler, einer Expansionseinrichtung und einem Verdampfer, die in einem Kreislauf miteinander verbunden sind, in welchem ein Kältemittel enthalten ist. Bei dieser bekannten Kompressionskälteanlage beträgt der Füllgrad des Kältemittels zwischen 50 und 100 % der kritischen Dichte des Kältemittels. Das Kältemittel ist dort vorzugsweise von Kohlendioxid gebildet.

Eine Anlage mit einer Wärmepumpe und einem Speicher ist aus der EP 0 969 255 A2 bekannt. Bei dieser bekannten Anlage weist die Wärmepumpe einen Verdichter, einen Hochtemperatur-Wärmeübertrager, eine Expansionseinrichtung und einen Niedertemperatur-Wärmeübertrager auf, die in einem Kreis miteinander verbunden und von Kohlendioxid als Arbeitsmittel durchflossen sind. Der Hochtemperatur-Wärmeübertrager ist im bodenseitigen Bereich des temperaturgeschichteten Speichers angeordnet und als Gegenstrom-Wärmeübertrager in einem Behälter vorgesehen. An diesen Behälter schließt oberseitig strömungstechnisch ein Steigrohr an, das sich mit einem Steigrohraustritt zum oberseitigen Bereich des Speichers erstreckt. Der Hochtemperatur-Wärmeübertrager ist vorzugsweise als Lammellenrohrbündel-Wärmeübertrager ausgebildet. Im Steigrohr kann zur Regelung des Volumenstromes des zu erwärmenden Speicherfluides eine Regelungseinrichtung vorgesehen sein.

Aus der DE 100 06 513 A1 ist eine Klimaanlage für ein Kraftfahrzeug mit einem Kältemittelkreislauf, einem Kühlmittelkreislauf, einem diese Kreisläufe wärmeübertragend koppelnden Kältemittel/Kühlmittel-Wärmeübertrager und Mitteln zur betriebsartabhängigen Steuerung der Kältemittelströmung bekannt, wobei die Klimaanlage neben einer Klimatisierungsbetriebsart wenigstens auch in einer Wärmepumpen- oder Reheatbetriebsart betreibbar ist. Bei dieser bekannten Klimaanlage ist dem Kältemittel/Kühlmittel-Wärmeübertrager im Kühlmittelkreislauf wenigstens in der Wärmepumpenbetriebsart ein Verbrennungsmotorabgas-Kühlmittel/Wärmeübertrager vorgeschaltet und/oder der Kältemittel/Kühlmittel-Wärmeübertrager füngiert in Reheatbetriebsart als ein kühlmittelseitig einem Zuluft/Kühlmittel-Wärmeübertrager vorgeschalteter Kondensator/Gaskühler. Zusätzlich oder alternativ kann eine Trockungsbetriebsart zum Trocknen des Zuluft/Kältemittel-Wärmeübertragers mit umgekehrter Luftförderrichtung vorgesehen sein. Bei dieser Klimaanlage kommt als Kältemittel beispielsweise R 134a oder CO₂ zur Anwendung. Der Kompressor des Kältemittelkreislaufes ist mechanisch an den Verbrennungsmotor angekoppelt.

Die DE 198 06 654 A1 beschreibt eine Klimaanlage für Fahrzeuge mit einem Kanalnetz, das durch Umschaltung von zwei Strömungsverteilern zwei einen gemeinsamen Kompressor und gemeinsame Expansionseinrichtungen aufweisende Betriebskreisläufe ermöglicht, von denen einer dem Kühlen und der andere dem Heizen des Fahrgastraumes eines Kraftfahrzeuges dient. Der Heizkreislauf ermöglicht eine sehr schnelle Erwärmung des Fahrgastraumes auch aus kaltem Zustand der Verbrennungskraftmaschine des Kraftfahrzeuges, da der zirkulierende Wärmeträger im Kompressor trägheitslos auf eine maximale Heiztemperatur erwärmt wird. Als Wärmequelle für das Heizen eignet sich das für die Kühlung der Verbrennungskraftmaschine vorgesehene Kanalnetz, wofür beide Kanalnetze über einen gemeinsamen Wärmetauscher gekoppelt sind. Als Wärmeträger kommt dort CO₂ zur Anwendung. Der Kompressor hat eine feste, d.h. kupplungslose Antriebsverbindung mit der Verbrennungskraftmaschine des Fahrzeugs.

Ein Verfahren und eine Vorrichtung zum Heizen und zum Kühlen des Nutzraumes eines von einer Brennkrsaftmaschine angetriebenen Kraftfahrzeuges ist aus der EP 0 945 290 A2 bekannt. Beim Kühlbetrieb wird ein Kreislaufmedium durch einen Verdichter, einen Umgebungswärmetauscher, eine Drosseleinrichtung und einen Innenraum-Wärmetauscher geführt, die in Reihe geschaltet sind und einen integralen geschlossenen Kreislauf bilden. Auf der Hochdruckseite des Kreislaufs wird ein überkritischer Druck und gleichzeitig auf der Niederdruckseite des Kreislaufs ein unterkritischer Druck erzeugt. Beim Heizbetrieb wird die Hochdruckseite des Kreislaufes ein unterkritischer Druck erzeugt. Beim Heizbetrieb wird die Hochdruckseite des Kreislaufes bei Kühlbetrieb zur Niederdruckseite und die Niederdruckseite des Kreislaufs bei Kühlbetrieb zur Hochdruckseite. Das Kreislaufmedium wird in dem Innenraum-Wärmetauscher unter einem überkritischen Druck geführt, wobei von dem Kreislaufmedium Wärmeenergie auf die dem Nutzraum zuzuführende Nutzraumluft übertragen wird. Das Kreislaufmedium wird zusätzlich durch einen Abgaswärmetauscher geführt. Das Kreislaufmedium ist vorzugsweise von CO₂ gebildet. Der Verdichter wird von der Brennkraftmaschine angetrieben.

Der Erfindung liegt die Aufgabe zugrunde, eine Klimatisierungseinrichtung der eingangs genannten Art zu schaffen, die zum Kühlen im Kältebetrieb und zum Heizen im Wärmepumpenbetrieb vorgesehen und im Vergleich zu Standard- d.h. R 134a-Anlagen eine verbesserte Leistungsstärke und Effizienz bei reduziertem Bauvolumen aufweist.

Diese Aufgabe wird erfindungsgemäß durch die Merkmale des Anspruchs 1, d.h. dadurch gelöst, daß die Einrichtung als autarkes flaches Modul ausgebildet ist, das in einem Kältemodus zum Kühlen und das in einem Wärmepumpenmodus zum Heizen vorgesehen ist, wobei der Verdichter von einem Kohlendioxid-Verdichter hoher Leistung und kleinem Bauvolumen gebildet und mit dem Verdichterantrieb in das Modul integriert ist, wobei das Modul einen Energieanschluß nur einer Energieform zur Energieversorgung des Antriebes des Moduls aufweist. Bei dem Kohlendioxid-Verdichter handelt es sich vorzugsweise um einen extern leistungsgeregelten Verdichter. Der Kohlendioxid-Verdichter weist vorzugsweise einen Durchmesser von ca. 100 bis 120 mm auf, so daß ein niedrig bauendes Modul realisierbar ist..

Die Kohlendioxid-Kältetechnik bietet Vorteile, die es ermöglichen, kleine flache Module zu realisieren, die dazu geeignet sind, im Kältebetrieb optimal zu kühlen und im Wärmepumpenbetrieb effizient zu heizen. Kohlendioxid-Verdichter besitzen bei einem kleinen Bauvolumen eine hohe Leistung, so daß sie mit dem zugehörigen Verdichterantrieb in ein Klimamodul integriert werden können. Der Verdichterantrieb kann von einem Elektromotor gebildet sein. Hierbei kann es sich um einen Gleichstrommotor oder um einen Drehstrommotor handeln. Bei dem Verdichterantrieb kann es sich um einen Hermetikantrieb, um einen Halbhermetikantrieb oder um einen offenen Riemenantrieb handeln. Zur Energieversorgung der Einrichtung ist nur ein äußerer elektrischer Energieanschluß am Modul erforderlich. Die elektrische Energieversorgung des Moduls kann bei einem Fahrzeug mit einem Verbrennungsmotor z.B. durch das Fahrzeug-Bordnetz mit 42 V Gleichstrom oder mit 380 V Drehstrom erfolgen. Beispielsweise kann der Verdichterantrieb mit 380 V Drehstrom und ein Gebläse und ein Ventilator der Einrichtung können mit 24 V Gleichstromenergie versorgt werden. Die elektrische Energieversorgung bei einem Brennstoffzellen-Fahrzeug kann direkt von der Brennstoffzelle des Fahrzeugs erfolgen. Für den offenen Verdichter-Antrieb sind zudem auch noch andere Antriebssysteme wie Hydraulik- oder Pneumatik-Antriebssysteme möglich.

Extern leistungsgeregelte Kohlendioxid-Verdichter lösen in vorteilhafter Weise das durch das hohe Einschalt-Drehmoment entstehende Anlaufproblem, da sie von 0 % Leistung kontinuierlich auf 100 % Leistung hochgefahren werden können. Durch die konstante Drehzahl bzw. durch die externe Leistungsregelung ist es möglich, als Expansionsorgan ein Kapillarrohr zu verwenden. Das spart in vorteilhafter Weise Gewicht und außerdem auch Kosten. Im Vergleich zu R 134a-Anlagen sind erfindungsgemäße Kohlendioxid-Klima- und Wärmepumpenmodule leistungsstärker und effizienter. Außerdem ist ihr Bauvolumen kleiner, so daß die Modulbauweise nur mit Kohlendioxid sinnvoll anwendbar ist. Insbesondere der Wärmepumpenbetrieb für die Heizung ist im Kohlendioxid-Betrieb erheblich interessanter, weil er deutlich effizienter als im R 134a-Betrieb ist. Mit R 134a-Anlagen sind komfortabel hohe Lufttemperaturen für die Innenraumheizung praktisch nicht erreichbar, wie bereits erwähnt worden ist. Ein weiterer Vorteil der erfindungsgemäßen Einrichtung besteht darin, daß der durch die thermodynamischen Eigenschaften des Kohlendioxids bedingte zeitliche Druckverlauf im Verdichter (geringere Druckspritzen) sich vorteilhaft auf die Geräuschentwicklung, d.h. Geräuschreduktion auswirkt, so daß sich die erfindungsgemäße Einrichtung auch aus diesem Grunde vorteilhaft zur Aufdach-Montage anbietet. Es werden keine Kältemittelanschlüsse für einen vom Fahrzeugmotor angetriebenen Verdichter und keine Wasseranschlüsse benötigt, um damit im Bedarfsfall eine Heizung zu betreiben. Die Modulbauweise mit einem äußeren Energieanschluß einer einzigen Energieform, insbesondere ein elektrischer Energieanschluß, zum Betrieb der erfindungsgemäßen Einrichtung weist außerdem den Vorteil auf, daß sie von normalem Wartungspersonal - ohne Ausbildung zum Kältefachmann - demontiert und im Bedarfsfall durch eine ungebrauchte neue Einrichtung ersetzt werden kann. Außerdem können kostengünstige Großserienbauteile wie Wärmeübertrager und Verdichter aus dem Pkw-Sektor verwendet werden. Ein weiterer Vorteil besteht darin, daß der Montageaufwand dadurch wesentlich vereinfacht ist, daß eine aufwendige Rohrverlegung im jeweiligen Fahrzeug entfällt.

Dadurch, daß bei der erfindungsgemäßen Einrichtung zweckmäßigerweise ein Kohlendioxid-Verdichter zur Anwendung gelangt, der einen Durchmesser von ca. 100 bis 120 mm aufweist, können Module mit Kälteleistungen zwischen 1 und 10 kW realisiert und in der jeweils gewünschten Anzahl auf einem Fahrzeugdach montiert werden, um die jeweils gewünschte Gesamtkälte- bzw. Heizleistung für das Fahrzeug zu erzielen. Bei dem besagten Fahrzeug kann es sich um einen Kleinbus, um einen Minibus oder um einen großen Omnibus handeln. Die Vorteile einer Dachmontage bestehen u.a. darin, daß das Gewicht gezielt auf die Vorder- und/oder Hinterachse des Fahrzeuges verteilt werden kann, daß das Gebläse des Innenraum-Wärmeübertragers die klimatisierte Luft von oben in den Fahrzeug-Innenraum verteilen oder bei Vorhandensein eines Luftkanalsystemes im Fahrzeug direkt in dieses einblasen kann, und daß eine einfache Frischluftzufuhr zum Außenraum-Wärmeübertrager möglich ist.

Weitere Einzelheiten, Merkmale und Vorteile ergeben sich aus der nachfolgenden Beschreibung eines in der Zeichnung dargestellten Ausführungsbeispieles der erfindungsgemäßen Heiz- und Kühl-Einrichtung sowie eines Anwendungsbeispieles für eine Anzahl solcher Einrichtungen.

Es zeigen:
- Figur 1: eine Diagrammdarstellung einer Ausbildung der Kühl- und Heizeinrichtung,
- Figur 2: einen Omnibus mit einer Anzahl auf seinem Dach montierten Einrichtungen gemäß Figur 1 in einer Seitenansicht, und
- Figur 3: den Omnibus gemäß Figur 2 in einer Ansicht von oben.

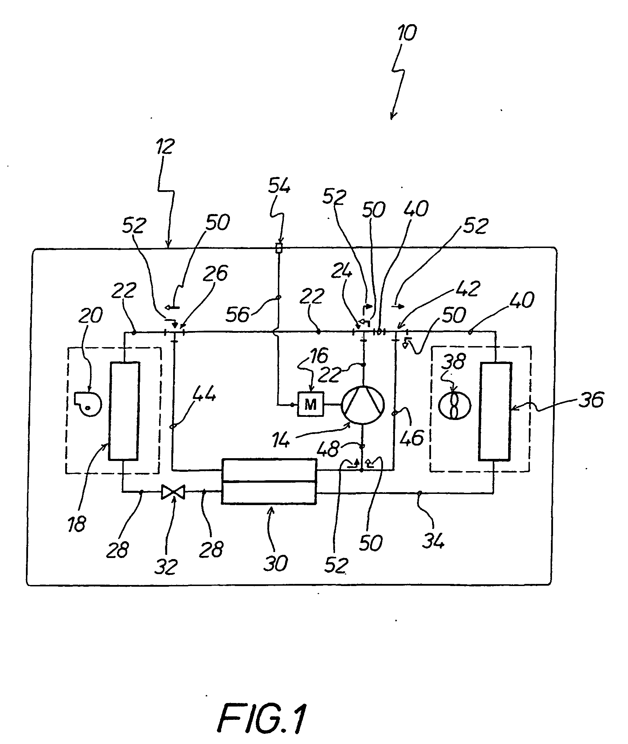

Figur 1 zeigt in einer Diagrammdarstellung schematisch eine Ausbildung der Einrichtung 10 zum Kühlen und zum Heizen eines Fahrzeugs. Die Einrichtung 10 ist als autarkes flaches Modul 12 ausgebildet, sie weist einen Verdichter 14 mit einem Verdichterantrieb 16 auf. Der Verdichter 14 ist von einem Kohlendioxidverdichter hoher Leistung und kleinen Bauvolumens gebildet. Der Kohlendioxidverdichter 14 und der Verdichterantrieb 16 sind in das Modul 12 integriert. Die Einrichtung 10 bzw. das Modul 12 weist außerdem einen Innenraum-Wärmeübertrager 18 auf, dem ein Gebläse 20 zugeordnet ist. Der Innenraum-Wärmeübertrager 18 ist mit dem Verdichter 14 mittels einer ersten Rohrleitung 22 verbunden. In die erste Rohrleitung 22 sind ein erstes Ventil 24 und ein zweites Ventil 26 eingeschaltet.

Der Innenraum-Wärmeübetrager 18 ist mittels einer zweiten Rohrleitung 28 mit einem internen Wärmetauscher 30 verbunden. In die zweite Rohrleitung 28 ist ein Expansionsorgan 32 eingeschaltet. Die Einrichtung 10 kann auch ohne Wärmetauscher 30 realisiert sein oder der Wärmetauscher 30 kann auch in einer anderen Verschaltungweise in die Einrichtung 10 integriert sein.

Der interne Wärmetauscher 30 ist bei dem dargestellten Ausführungsbeispiel der Einrichtung 10 mittels einer dritten Rohrleitung 34 mit einem Außenraum-Wärmeübertrager 36 verbunden, dem eine Ventilatoreinrichtung 38 zugeordnet ist. Der Außenraum-Wärmeübertrager 36 ist mittels einer vierten Rohrleitung 40 mit dem ersten Ventil 24 verbunden. In die vierte Rohrleitung 40 ist ein drittes Ventil 42 eingeschaltet. Das zweite Ventil 26 ist mittels einer fünften Rohrleitung 44 mit dem internen Wärmetauscher 30 verbunden. Das dritte Ventil 42 ist mittels einer sechsten Rohrleitung 46 mit dem internen Wärmetauscher 30 verbunden. Von der sechsten Rohrleitung 46 zweigt eine siebente Rohrleitung 48 ab, die an den Verdichter 14 angeschlossen ist.

Der Heizbetrieb der Einrichtung 10 ist durch die Pfeile 50 verdeutlicht, wobei das erste, das zweite und das dritte Ventil 24, 26 und 42 die jeweils entsprechende Stellung einnehmen. Der Kühlbetrieb ist durch die Pfeile 52 verdeutlicht, wobei die Ventile 24, 26 und 42 jeweils eine entsprechende andere Stellung einnehmen.

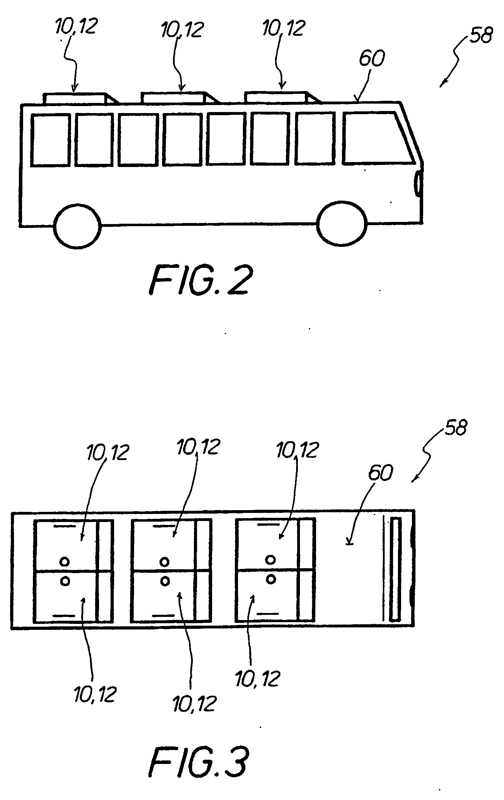

Das Modul 12 weist einen äußeren elektrischen Energieanschluß 54 auf, der mit dem von einem Elektromotor gebildeten Verdichterantrieb 16 zusammengeschaltet ist. Das ist durch die dünne Linie 56 angedeutet. Der elektrische Energieanschluß 54 ist auch mit dem Gebläse 20 und mit dem Ventilator 38 zusammengeschaltet. Der Verdichterantrieb 10 kann beispielsweise auf der Spannungsebene 380 V Drehstrom und der elektrische Antrieb des Gebläses 20 und des Ventilators 38 kann z.B. auf der Spannungsebene 24 V Gleichstrom erfolgen. Bei dem Modul 12 handelt es sich um ein autarkes flaches Modul. Die Figuren 2 und 3 verdeutlichen schematisch ein Fahrzeug 58, bei dem es sich um einen Omnibus handelt, auf dessen Dach 60 eine den Anforderungen an die Kälte- und Heizenergie 58 entsprechende Anzahl Module 12, im konkreten Ausführungsbeispiel sechs Module 12, montiert sind.

## Patentansprüche

1. Klimatisierungseinrichtung für ein Fahrzeug (58), mit einem Verdichter (14) mit einem Verdichterantrieb (16), einem Innenraum-Wärmeübertrager (18), einem Expansionsorgan (32), und einem Außenraum-Wärmeübertrager (36), wobei die Einrichtung (10) als autarkes flaches Modul (12) ausgebildet ist, der Verdichter (14) mit dem Verdichterantrieb (16) in das Modul (12) integriert ist, und das Modul (12) einen Energieanschluß (54) für nur eine einzige Energieform zur Energieversorgung des Moduls (12) aufweist, wobei das Modul (12) zur Montage auf dem Dach (60) eines Fahrzeugs (58) vorgesehen ist.
**dadurch gekennzeichnet,**
**daß** ein interner Wärmeübertrager (30) vorgesehen ist, daß die Einrichtung (10) in einem Kältemodus zum Kühlen und in einem Wärmepumpenmodus zum Heizen vorgesehen ist und daß der Verdichter (14) ein Kohlendioxid-Verdichter hoher Leistung und kleinen Bauvolumens ist.

2. Einrichtung nach Anspruch 1,
**dadurch gekennzeichnet ,**
**daß** der Kohlendioxid-Verdichter extern leistungsgeregelt ist.

3. Einrichtung nach Anspruch 1 oder 2,
**dadurch gekennzeichnet ,**
**daß** der Kohlendioxid-Verdichter einen Durchmesser von ca. 100 bis 120 mm aufweist.

4. Einrichtung nach Anspruch 1,
**dadurch gekennzeichnet,**
**daß** der Energieanschluß (54) des Moduls (12) ein elektrischer Energieanschluß ist, der auf einer einzigen Spannungsebene oder der auf mehreren Spannungsebenen erfolgt.

5. Einrichtung nach einem der Ansprüche 1 bis 4,
**dadurch gekennzeichnet,**
**daß** der Verdichterantrieb (16) von einem Elektromotor gebildet ist.

6. Einrichtung nach Anspruch 5,
**dadurch gekennzeichnet,**
**daß** der Elektromotor von einem Gleichstrommotor gebildet ist.

7. Einrichtung nach Anspruch 5,
**dadurch gekennzeichnet,**
**daß** der Elektromotor von einem Drehstrommotor gebildet ist.

8. Einrichtung nach Anspruch 1,
**dadurch gekennzeichnet,**
**daß** der Energieanschluß (54) des Moduls (12) ein hydraulischer oder ein pneumatischer Energieanschluß ist.

9. Einrichtung nach einem der Ansprüche 1 bis 8,
**dadurch gekennzeichnet ,**
**daß** der Verdichterantrieb (16) als Hermetikantrieb oder als Halbhermetikantrieb oder als offener Antrieb ausgebildet ist, der mit dem äußeren elektrischen Energieanschluß (54) zusammengeschaltet ist.

10. Einrichtung nach einem der Ansprüche 1 bis 9,
**dadurch gekennzeichnet,**
**daß** das Expansionsorgan (32) von einem Kapillarrohr gebildet ist.

## Claims

1. Air-conditioning system for a vehicle (58), with a compressor (14) having a compressor drive (16), with an interior heat exchanger (18), with an expansion member (32) and with an exterior heat exchanger (36), the system (10) being designed as an independent module (12), the compressor (14) having the compressor drive (16) being integrated into the module (12), and the module (12) having an energy connection (54) for only a single form of energy for the supply of energy to the module (12), the module (12) being intended to be mounted on the roof (60) of a vehicle (58), **characterized in that** an internal heat exchanger (30) is provided, **in that** the system (10) is provided in a cold mode for cooling and in a heat-pump mode for heating, and **in that** the compressor (14) is a carbon-dioxide compressor of high power and of small overall volume.

2. System according to Claim 1, **characterized in that** the carbon-dioxide compressor is power-regulated externally.

3. System according to Claim 1 or 2, **characterized in that** the carbon-dioxide compressor has a diameter of approximately 100 to 120 mm.

4. System according to Claim 1, **characterized in that** the energy connection (54) of the module (12) is an electrical energy connection which takes place at a single voltage level or at a plurality of voltage levels.

5. System according to one of Claims 1 to 4,
**characterized in that** the compressor drive (16) is formed by an electric motor.

6. System according to Claim 5, **characterized in that** the electric motor is formed by a direct-current motor.

7. System according to Claim 5, **characterized in that** the electric motor is formed by a three-phase motor.

8. System according to Claim 1, **characterized in that** the energy connection (54) of the module (12) is a hydraulic or a pneumatic energy connection.

9. System according to one of Claims 1 to 8,
**characterized in that** the compressor drive (16) is designed as a hermetic drive or as a semi-hermetic drive or as an open drive which is connected together with the outer electrical energy connection (54).

10. System according to one of Claims 1 to 9,
**characterized in that** the expansion member (32) is formed by a capillary tube.

## Revendications

1. Dispositif de climatisation pour un véhicule automobile (58), comportant un compresseur (14) avec un système d'entraînement (16), un échangeur thermique pour l'habitacle (18), un organe d'expansion (32) et un échangeur thermique pour l'extérieur (36), le dispositif (10) étant conçu sous forme de module plat (12) autarcique, le compresseur (14) avec le système d'entraînement (16) étant intégrés dans le module (12) et le module (12) comportant un branchement d'énergie (54) pour une seule forme d'énergie destinée à l'alimentation en énergie du module (12), le module (12) étant prévu sur le toit (60) d'un véhicule automobile (58), **caractérisé en ce qu'**il est prévu un échangeur thermique interne (30), **en ce que** le dispositif (10) est prévu en mode de réfrigération pour le refroidissement et en mode de pompe à chaleur pour le chauffage et **en ce que** le compresseur (14) est un compresseur au dioxyde de carbone ayant une grande puissance et un faible volume de construction.

2. Dispositif selon la revendication 1, **caractérisé en ce que** le compresseur au dioxyde de carbone est régulé en puissance de l'extérieur.

3. Dispositif selon la revendication 1 ou 2, **caractérisé en ce que** le compresseur au dioxyde de carbone a un diamètre d'environ 100 à 120 mm.

4. Dispositif selon la revendication 1, **caractérisé en ce que** le branchement d'énergie (54) du module (12) est un branchement d'énergie électrique, qui est effectué sur un seul niveau de tension ou sur plusieurs niveaux de tension.

5. Dispositif selon l'une quelconque des revendications 1 à 4,
**caractérisé en ce que** le système d'entraînement (16) du compresseur est formé par un moteur électrique.

6. Dispositif selon la revendication 5, **caractérisé en ce que** le moteur électrique est formé par un moteur à courant continu.

7. Dispositif selon la revendication 5, **caractérisé en ce que** le moteur électrique est formé par un moteur à courant triphasé.

8. Dispositif selon la revendication 1, **caractérisé en ce que** le branchement d'énergie (54) du module (12) est un branchement d'énergie hydraulique ou pneumatique.

9. Dispositif selon l'une quelconque des revendications 1 à 8,
**caractérisé en ce que** le système d'entraînement (16) du compresseur est réalisé sous forme d'entraînement hermétique ou d'entraînement semi-hermétique ou d'entraînement ouvert, qui est raccordé au branchement d'énergie électrique (54) extérieur.

10. Dispositif selon l'une quelconque des revendications 1 à 9, **caractérisé en ce que** l'organe d'expansion (32) est formé par un tube capillaire.
